# FASCICULE DE BREVET EUROPEEN

(11) **EP 3 613 905 B1**
(45) Date de publication et mention de la délivrance du brevet: **23.02.2022**
(21) Numéro de dépôt: 19189151.4
(22) Date de dépôt: 30.07.2019
(51) Int. Cl.: E02F 3/84, G01C 15/00, E02F 9/26

(54) **SYSTÈME DE GUIDAGE DE NIVELLEMENT POUR ENGINS D'EXCAVATION OU DE TERRASSEMENT**
FÜHRUNGSSYSTEM ZUM EINEBNEN FÜR ERDAUSHUB- ODER ERDBEWEGUNGSMASCHINEN
LEVELLING GUIDING SYSTEM FOR EXCAVATING OR EARTHMOVING PLANT

(30) Priorité: 20.08.2018 FR 1857554
(43) Date de publication de la demande: 26.02.2020
(73) Titulaire: Bridgin, 78600 Le Mesnil Le Roi (FR)
(72) Inventeur: CORVE, Thomas, 95260 Jouy le Moutier (FR); GAMAL, Albert, 78600 Mesnil le Roi (FR)
(74) Mandataire: Debay, Damien

(56) Documents cités:
- EP-A1- 0 443 026
- EP-A1- 2 103 745
- EP-A2- 1 914 352
- US-A- 4 829 418
- US-A1- 2016 273 196

## Description

### DOMAINE TECHNIQUE DE L'INVENTION

L'invention se rapporte au domaine des systèmes de guidage en particulier pour engins d'excavation, plus particulièrement au guidage du nivellement des sols par des engins d'excavation ou de terrassement utilisant des lames de nivellement.

### ÉTAT DE LA TECHNIQUE ANTÉRIEURE

Usuellement, pour niveler les sols lors d'un chantier, un laser rotatif est utilisé par un opérateur afin de définir un plan de nivellement qui sera exécuté par un engin d'excavation ou de terrassement au moyen d'une lame horizontale positionnée devant le châssis et les chenilles de l'engin, également appelé lame de nivellement.

Plus précisément, la lame de nivellement comprend un tube positionné perpendiculairement à la lame, sur lequel est placé un capteur laser qui va détecter le faisceau du laser rotatif.

L'opérateur de l'engin d'excavation ou de terrassement connaît la distance constante entre le capteur laser et le bord inférieur de la lame, il peut donc contrôler la position de la lame vis-à-vis du plan de nivellement défini par le laser rotatif. Ainsi on peut obtenir un nivèlement constant des sols, quel que soit le relief d'origine des sols.

Le document EP 1 914 352 décrit un tel système de nivellement avec un bulldozer et un capteur laser sous forme de tube pour contrôler le nivellement.

Néanmoins, ce système comprend des inconvénients majeurs, en particulier, de par l'utilisation d'un tube généralement soudé ou fixé sur la lame.

En effet, en fonction du temps et de l'utilisation, l'axe du tube peut être modifié par plusieurs facteurs tels que :
- des déformations causées par les chocs subis durant les travaux d'excavation ou de terrassement avec les matériaux déplacés
- des vibrations créant une oscillation résultant de l'utilisation normale de l'engin, etc.

Cette modification de l'axe entraîne ainsi une impression dans le nivellement puisque celui-ci repose sur la distance constante et connue entre le bord inférieur de la lame et le capteur laser positionné sur le tube.

En outre, ce système est particulièrement utilisé par les engins d'excavation ou de terrassement de type tracteur à chenilles ou à roues, ou bouteur, communément appelé bulldozer. En effet, ce type d'engin d'excavation ne comprend pas de bras hydraulique devant la lame qui obstrue le champ de « vision » du capteur laser.

**Or** pour diminuer les coûts, un engin muni d'un bras hydraulique est généralement employé comme engin d'excavation ou de terrassement puisque celui-ci est plus polyvalent avec son bras articulé et peut se voir apposer une lame de nivellement devant son châssis au même titre qu'un bulldozer.

### EXPOSE DE L'INVENTION

La présente invention a donc pour objet de proposer un système de guidage de nivellement pour engins d'excavation ou de terrassement, permettant de pallier au moins une partie des inconvénients de l'art antérieur, en proposant une alternative plus fiable, précise, durable et résistante à des conditions extrêmes d'utilisation dans le temps que le tube muni d'un capteur laser et fixé à la lame de terrassement.

A cet effet, l'invention concerne un système de guidage de nivellement pour engins d'excavation selon la revendication 1.

Selon une particularité, le système comprend plusieurs dispositifs de détection de positions angulaires placés respectivement sur le bras de support, sur le bras de godet, sur la lame de terrassement et sur la cabine (20) lorsque celle-ci est pivotante

Selon une autre particularité, le dispositif de détection laser et le dispositif de détection de position angulaire sont réunis en unique dispositif de détection combinant capteur d'angle et capteur laser.

Avantageusement, le capteur laser du dispositif de détecteur de laser est de préférence une cellule de réception linéaire incluant des photodiodes alignées permettant de recueillir des données représentatives de la détection de hauteur du plan de nivellement de référence.

Selon une particularité, les dispositifs de détection de positions angulaires, et le dispositif de détection laser comprend une alimentation embarquée et un module de communication sans fil configuré pour communiquer et transmettre des données à l'appareil de contrôle, lui-même équipé d'un module de communication sans fil.

Selon une autre particularité, le dispositif de détection positionner sur la cabine est combiné avec l'appareil de contrôle.

Avantageusement, l'appareil de contrôle comprend un écran, des touches de commandes, une mémoire, un module de communication, un module de calcule, le module de calcule étant configuré pour connaitre l'emplacement de la lame de terrassement vis-à-vis du plan de nivellement défini et d'afficher sur l'écran, les indications relatives au mouvement de la lame à effectuer pour conserver la position verticale en profondeur (D) à la valeur souhaitée.

Selon une particularité, l'alimentation embarqué des dispositifs de détection est une ou plusieurs batteries rechargées par des cellules photovoltaïques.

Un autre objet de la présente demande est l'utilisation d'un système de guidage selon l'invention pour le nivellement ou le terrassement d'un sol au moyen d'un engin d'excavation ou de terrassement.

Un troisième objet de la présente demande est un engin de chantier disposant un système de guidage pour le nivellement ou le terrassement d'un sol selon l'invention

### BRÈVE DESCRIPTION DES FIGURES

D'autres caractéristiques, détails et avantages de l'invention ressortiront à la lecture de la description qui suit en référence aux figures annexées, sur lesquelles :
- la figure 1, représente un engin d'excavation équipé du système de guidage selon l'invention,
- la figure 2, représente un système selon l'invention de guidage de nivellement, qui utilise la relation entre les angles détectés, la position verticale en profondeur de la lame de l'engin d'excavation et du plan laser de nivellement

### DESCRIPTION DÉTAILLÉE DE DIFFÉRENTS MODES DE RÉALISATION DE L'INVENTION

De nombreuses combinaisons peuvent être envisagées sans sortir du cadre de l'invention ; l'homme de métier choisira l'une ou l'autre en fonction des contraintes économiques, ergonomiques, dimensionnelles ou autres qu'il devra respecter.

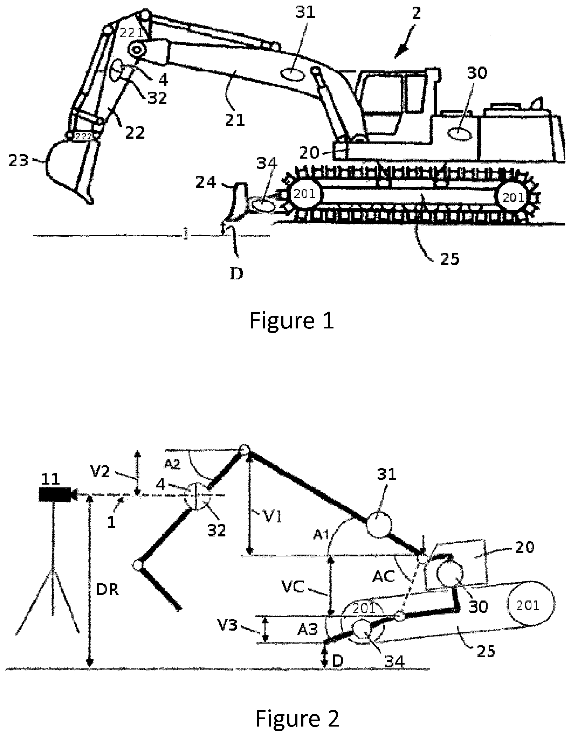

En référence aux figures 1 à 2, le système selon l'invention permet de recueillir des données de position relative aux différents organes articulés d'un engin de travaux tel qu'une pelleteuse. Le système s'applique aux engins d'excavation et/ou de terrassement et plus généralement à tout engin nécessitant un contrôle de la profondeur d'un outil de travail et en particulier d'une lame de terrassement. Dans ce qui suit et de manière non limitative, la description fait référence à un engin d'excavation.

Typiquement, ce type d'engin (2) comprend :
- un châssis (25) doté de roues ou de chenilles (201),
- une cabine de pilotage (20) attachée de façon pivotante sur le châssis (25),
- un bras de support (21) également appelé bras principal, attaché de façon pivotante sur la cabine (20),
- un bras de godet (22) également appelé balancier, ayant une première extrémité (221) et une deuxième extrémité (222), la première extrémité étant attachée de façon pivotante sur le bras de support (21) ou principal,
- un outil d'excavation (23) ou de terrassement par exemple un godet, attaché de façon pivotante sur la deuxième extrémité (222) du bras de godet (22) ou balancier,
- une lame de terrassement (24), celle-ci est horizontale, positionnée devant le châssis et montée sur celui-ci de façon pivotante, et
- un système actionneur recevant des signaux de commande et permettant d'actionner le bras de support ou principal, le bras de godet ou balancier, l'outil d'excavation ou de terrassement et la lame de terrassement.

Les signaux de commande sont initiés via une cabine de pilotage.

Les données de position relative aux différents organes articulés (20, 21, 22, 24) d'un engin excavation sont des données de position angulaire par rapport à un même plan ou direction de référence, par exemple la verticale.

Ces données de position angulaire peuvent être générées par des modules électroniques à capteur de position angulaire par exemple un accéléromètre à au moins deux axes, situé dans des dispositifs de détection de positions angulaires (30, 31, 32, 34), par exemple le dispositif XD467 de chez BRIDGIN (France).

Dans un mode de réalisation, chaque dispositif de détection (30, 31, 32, 34) détermine sa position angulaire intrinsèque par rapport à la verticale.

Dans un mode de réalisation, le dispositif de détection (30) disposé sur la cabine (20) possède trois capteurs angulaires et fournit ainsi le roulis et le lacet en supplément de sa position angulaire intrinsèque par rapport à la verticale.

Pour s'affranchir des câbles qui peuvent être endommagés durant l'utilisation de l'engin d'excavation et rendre plus rapide et facile l'installation du système de guidage, les données de positions angulaires de chaque capteur sont avantageusement traitées par un module de traitement et envoyées à l'aide d'un module de communication sans fil inclus dans chaque dispositif de détection, par exemple dans un message radio, Bluetooth, wifi, IR. Toute autre communication à courte ou moyenne distance sans fil peut être utilisée.

Dans un mode de réalisation, lorsque le dispositif de détection de position angulaire (30) située sur la cabine fournit les trois angles susmentionnés, un moyen de communication filaire peut être utilisé en lieu et place de la communication radio, étant donné sa proximité avec l'appareil de contrôle (10).

Dans certains modes de réalisation, le dispositif de détection (30) positionner sur la cabine (20) peut être combiné avec l'appareil de contrôle (10).

Dans un mode de réalisation, chaque dispositif de détection de positions angulaires (30, 31, 32, 34) comprend une source d'alimentation embarquée permettant d'être autonome et éviter ainsi les fils. Une telle source peut être par exemple une ou plusieurs batteries rechargées par des cellules photovoltaïques.

Comme illustré sur la figure 1, le système de guidage de nivellement comprend plusieurs dispositifs de détection de positions angulaires (30, 31, 32, 34) placés respectivement sur la cabine, sur le bras de support, sur le bras de godet, et sur la lame de terrassement.

En outre, le système comprend également un dispositif de détection laser (4) situé sur le bras de godet et comprenant un capteur laser configuré pour identifier et reconnaitre un plan de nivellement (1) défini par un laser rotatif (11). À titre d'exemple non limitatif, on peut utiliser le dispositif XD461 de chez BRIDGIN (France) comprenant des photocellules de type BPW34S.

**Au** même titre que les dispositifs de détection de positions angulaires (30, 31, 32, 34), le dispositif de détection laser (4) comprend une alimentation embarquée et un module de communication sans fil.

Dans un mode de réalisation, le dispositif de détection laser (4) et le dispositif de détection de positions angulaires (32) positionnés sur le bras de godet sont réunis en unique dispositif de détection combinant capteur d'angle et capteur laser.

La pose de chaque dispositif détecteur (30, 31, 32, 34 et 4) peut être effectuée selon une direction privilégiée de l'organe articulé servant de support au dispositif détecteur. Les angles respectifs servant à déterminer la profondeur atteinte par la lame de terrassement (24) peuvent ainsi être connus dans la mesure où la position angulaire de chaque capteur (30, 31, 32, 34 et 4) par rapport au bras (21, 22) / cabine (20), châssis (25) / lame (24) qui le supporte est un paramètre connu.

Le capteur laser du dispositif de détecteur de laser (4) est de préférence une cellule de réception linéaire incluant des photodiodes alignées permettant de recueillir des données représentatives de la détection de hauteur du plan de nivellement (1) de référence (pour départ et/ou pour correction de dérives). La linéarité du récepteur laser permet de capter le faisceau sur une plus grande hauteur, et par conséquent de ne pas ajuster en permanence la position du dispositif détecteur laser (4) lors du cheminement de la machine pendant le nivellement.

La position du capteur laser sur le bras de godet (22) ou balancier est essentielle. En effet, en bougeant de manière coordonnée les bras 21 et 22 peuvent faire bouger de sorte que le capteur laser se déplace dans la verticale sans autre déviation, ceci résulte du fait que la deuxième extrémité (222) du bras de godet n'est pas en contact avec un autre élément articulé lui-même en en contact permanent avec le sol.

Dans un mode de réalisation, une photodiode intermédiaire peut être considérée comme un capteur de référence et les photodiodes placées plus haut, respectivement plus bas par rapport à cette référence sont chacune associées à un incrément, respectivement un décrément d'ajustement en hauteur.

Alternativement, un récepteur à bas coût et moins précis peut disposer simplement d'une cellule non linéaire, avec éventuellement un système de lentille pour augmenter la zone de détection. L'une ou l'autre de ces options peuvent être retenues selon les besoins.

Dans un mode de réalisation économique lorsque le sol comprend un relief parallèle au plan de nivellement (1), ce qui est notamment le cas lorsqu'il y a déjà eu un premier nivellement, le dispositif de capteur d'angle (30) situé sur la cabine n'est pas indispensable puisque celui-ci est coplanaire au plan de nivellement (1) de référence.

Dans un autre mode de réalisation, le capteur d'angle de la cabine (30) peut être remplacé par un inclinomètre ou tout autre capteur analogue permettant de déterminer l'inclinaison du sol. Un tel capteur autorise le nivellement d'un plan incliné. A cet effet, le plan laser (1) doit être toujours coplanaire au plan de nivellement. Dans ce même cas, le capteur est mis à contribution pour détecter la direction de la pente du plan incliné par rapport à la cabine (lacet).

En outre, ce capteur positionné sur la cabine peut également être utilisé, pour mesurer l'angle de rotation entre la cabine et le châssis, permettant au conducteur de réaliser le nivelage en maintenant sa cabine dans une position non alignée avec le châssis et améliorant ainsi la visibilité de l'opération. Une fonction logicielle dans l'appareil de contrôle (10) autorise la modification de cet angle pendant la réalisation du nivellement.

Chaque module de communication sans fil des détecteurs (30, 31, 32, 34 et 4) envoie les informations issues des modules de traitement vers un récepteur sans fil d'un appareil de contrôle qui fournit à l'opérateur des indications visuelles au travers d'un écran, facilitant le pilotage de la lame de terrassement (24). L'appareil de contrôle dispose alors de tous les paramètres nécessaires au calcul de la position de la lame de terrassement (24) et des données relatives au bras de support (21), au bras de godet (22), à l'orientation de la cabine (20) et du châssis (25).

La figure 2 illustre la relation entre les angles (A1, A2, A3 et AC) par rapport à la position horizontale et la position verticale en profondeur (D) de la lame de terrassement de l'engin d'excavation. Les angles illustrés se déduisent des données de position par rapport à la verticale fournie par les capteurs d'angle. Les distances verticales associées à chacun des organes articulés de l'engin peuvent se calculer comme suit :
- V1 = longueur du bras support (21) * sin(A1),
- V2 = longueur entre le dispositif de détection laser (4) et la première extrémité (221) du bras de godet (22) * sin(A2), lorsque le détecteur laser est correctement positionné sur le plan de nivellement (1) de référence,
- V3 = longueur de la lame de terrassement (24) * sin(A3),
- VC = distance entre le départ du bras de support et le départ de la lame de terrassement * sin (AC).

La distance verticale de nivellement effective D se calcule grâce à l'équation D = DR - (V1 + V2 + V3 + VC) des distances verticales, les composantes de cette somme sont des distances relatives, dans l'exemple de la figure 2, la distance V1 est négative.

Une fois la profondeur désirée DR paramétrée dans l'appareil de contrôle, l'appareil de contrôle peut déterminer la différence de profondeur D de la lame de terrassement par rapport à la profondeur de référence.

Dans un autre mode de réalisation, les calculs sont réalisés à l'aide de vecteurs à trois dimensions. Ces vecteurs sont calculés à l'aide de matrices de rotations et de translations, construites à partir respectivement des angles capteurs et de la longueur de chaque élément mobile. Le vecteur de position du récepteur laser et le vecteur de position de la lame permettent de déterminer la distance D à l'aide de la distance DR.

Le module de calcul de l'appareil de contrôle (10) peut utiliser la position de la lame calculée (la distance D donne la profondeur effective atteinte par la lame) pour déterminer une consigne d'ajustement vertical de la lame : une valeur positive pour une lame trop haute, et une valeur négative pour une lame trop basse. Une valeur égale à zéro signifie que la lame est sur le plan de référence. Le module de calcul délivre ainsi un signal représentatif de ladite consigne à destination de l'écran d'affichage, flèche vers le bas pour baisser la lame (24), trait horizontal pour maintenir la position, et flèche vers le haut pour rehausser la lame (24). Une de ces icônes est par exemple sélectionnée et affichée en fonction de la valeur D calculée.

L'appareil de contrôle (10) comporte une mémoire pour stocker le paramètre de profondeur de référence. Le module de calcul permet par exemple de calculer une consigne de mouvement vertical de la lame par utilisation de données de position angulaire fournies par les dispositifs détecteurs et du paramètre de profondeur de référence DR.

Dans la cabine, l'appareil de contrôle peut se présenter sous la forme d'un boîtier compact doté de touches de commandes et d'un écran LCD ou analogue facilitant notamment les opérations de paramétrage (les fonctions pouvant être affichées). Un afficheur séparé et contrôlé par le boîtier peut être prévu pour indiquer la consigne visuelle. L'utilisateur peut contrôler dans son champ de vision habituel les indications relatives au mouvement de la lame à effectuer pour conserver la distance D à la valeur souhaitée. Cet afficheur de cabine peut être situé dans un boîtier qui incorpore l'interface de communication sans fil. La réception ainsi que l'émission radio sont gérées par cette interface de communication. L'émission radio en provenance de la cabine peut servir notamment à synchroniser les signaux émis par les dispositifs, à donner un identifiant, à demander des statuts par exemple le niveau de charge batterie, et peut également servir pour la maintenance (mise à jour de logiciel embarqué, demande de version, et opérations de suivi similaires).

## Revendications

1. Système de guidage de nivellement pour engins d'excavation équipés :
• un châssis (25) doté de roues ou de chenilles (201),
• une cabine de pilotage (20) attachée sur le châssis (25), de préférence de façon pivotante
• une lame de terrassement (24), celle-ci est horizontale, positionnée devant le châssis et montée sur celui-ci de façon pivotante, et
• un dispositif de détection laser (4) et comprenant un capteur laser configuré pour identifier et reconnaitre un plan de nivellement (1) défini par un laser rotatif (11),
• un appareil de contrôle (10) configuré pour contrôler la position de la lame de terrassement, et donner une instruction à l'opérateur afin que la lame de terrassement suit le plan de nivellement défini (1),
**caractérisé en ce que** l'appareil de contrôle est configuré pour contrôler la position de la lame de terrassement en fonction des données en provenance des dispositifs de détection de positions angulaires (30, 31, 32, 34) et de détection laser (4), et **en ce que** le système de guidage comprend en outre :
• un système actionneur recevant des signaux de commande et permettant d'actionner le bras de support ou principal, le bras de godet ou balancier, l'outil d'excavation ou de terrassement et la lame de terrassement,
• des dispositifs de détection de positions angulaires (30, 31, 32, 34) disposés sur les éléments mobiles de l'engin et configurés pour calculer la position angulaire par rapport à un même plan ou direction de référence, par exemple la verticale des différents éléments mobiles,
• un bras de support (21) également appelé bras principal, attaché de façon pivotante sur la cabine (20),
• un bras de godet (22) également appelé balancier, ayant une première extrémité (221) et une deuxième extrémité (222), la première extrémité étant attachée de façon pivotante sur le bras de support (21) ou principal,
• un outil d'excavation (23) ou de terrassement, attaché de façon pivotante sur la deuxième extrémité (222) du bras de godet (22) ou balancier,
et **en ce que** le dispositif de détection laser (4) est situé sur le bras de godet.

2. Système de guidage de nivellement selon la revendication 1, **caractérisé en ce que** le système comprend plusieurs dispositifs de détection de positions angulaires (30, 31, 32, 34) placés respectivement sur le bras de support (21), sur le bras de godet (22), sur la lame de terrassement (24) et sur la cabine (20) lorsque celle-ci est pivotante.

3. Système de guidage de nivellement selon l'une des revendications précédentes, **caractérisé en ce que** le dispositif de détection laser (4) et le dispositif de détection de position angulaire (32) sont réunis en unique dispositif de détection combinant capteur d'angle et capteur laser.

4. Système de guidage de nivellement selon l'une des revendications précédentes, **caractérisé en ce que** le capteur laser du dispositif de détecteur de laser (4) est de préférence une cellule de réception linéaire incluant des photodiodes alignées permettant de recueillir des données représentatives de la détection de hauteur du plan de nivellement (1) de référence.

5. Système de guidage de nivellement selon l'une des revendications précédentes, **caractérisé en ce que** les dispositifs de détection de positions angulaires (30, 31, 32, 34), et le dispositif de détection laser (4) comprend une alimentation embarquée et un module de communication sans fil configuré pour communiquer et transmettre des données à l'appareil de contrôle, lui-même équipé d'un module de communication sans fil.

6. Système de guidage de nivellement selon l'une des revendications précédentes, **caractérisé en ce que** le dispositif de détection de position angulaire (30) positionné sur la cabine (20) est combiné avec l'appareil de contrôle (10).

7. Système de guidage de nivellement selon l'une des revendications précédentes, **caractérisé en ce que** l'appareil de contrôle (10) comprend un écran, des touches de commandes, une mémoire, un module de communication, un module de calcule, le module de calcule étant configuré pour connaitre l'emplacement de la lame de terrassement vis-à-vis du plan de nivellement défini (1) et d'afficher sur l'écran, les indications relatives au mouvement de la lame à effectuer pour conserver la position verticale en profondeur (D) à la valeur souhaitée.

8. Système de guidage de nivellement selon l'une des revendications précédentes, **caractérisé en ce que** l'alimentation embarquée des dispositifs de détection (30, 31, 32, 34 et 4) est une ou plusieurs batteries rechargées par des cellules photovoltaïques.

9. Utilisation d'un système de guidage selon les revendications 1 à 8 pour le nivellement ou le terrassement d'un sol au moyen d'un engin d'excavation ou de terrassement.

10. Engin d'excavation ou de terrassement comprenant un système de guidage de guidage de nivellement selon l'une des revendications 1 à 8.

## Patentansprüche

1. Nivellierungsführungssystem für Erdaushubmaschinen, ausgestattet mit:
• einem Fahrwerk (25), das mit Rädern oder Ketten (201) versehen ist,
• einem Führerstand (20), der an dem Fahrwerk (25) angebracht ist, vorzugsweise schwenkbar,
• einer Erdbewegungsschaufel (24), wobei diese horizontal, vor dem Fahrwerk positioniert und an diesem schwenkbar montiert ist,
• einer Lasererkennungsvorrichtung (4), umfassend einen Lasersensor, der zum Identifizieren und Erkennen einer Nivellierebene (1), die von einem Rotationslaser (11) definiert wird, konfiguriert ist,
• einem Steuergerät (10), das zum Steuern der Position der Erdbewegungsschaufel und Ausgeben einer Anweisung an den Bediener, damit die Erdbewegungsschaufel der definierten Nivellierebene (1) folgt, konfiguriert ist,
**dadurch gekennzeichnet, dass** das Steuergerät zum Steuern der Position der Erdbewegungsschaufel in Abhängigkeit von Daten von Vorrichtungen zur Erkennung von Winkelpositionen (30, 31, 32, 34) und der Lasererkennungsvorrichtung (4) konfiguriert ist, und dass das Führungssystem weiterhin umfasst:
• ein Betätigungssystem, das Befehlssignale empfängt und ermöglicht, den Träger- oder Hauptarm, den Baggerarm oder Ausleger des Erdaushub- oder Erdbewegungswerkzeugs und der Erdbewegungsschaufel zu betätigen,
• Vorrichtungen zur Erkennung von Winkelpositionen (30, 31, 32, 34), die an den beweglichen Elementen der Maschine angeordnet sind und zum Berechnen der Winkelposition in Bezug auf dieselbe Bezugsebene oder -richtung, beispielsweise die Senkrechte von unterschiedlichen beweglichen Elementen, konfiguriert sind,
• einen Trägerarm (21), der auch Hauptarm genannt wird und der schwenkbar an dem Stand (20) angebracht ist,
• einen Baggerarm (22), der auch Ausleger genannt wird, mit einem ersten Ende (221) und einem zweiten Ende (222), wobei das erste Ende schwenkbar an dem Träger- oder Hauptarm (21) angebracht ist,
• ein Erdaushub- oder Erdbewegungswerkzeug (23), das schwenkbar an dem zweiten Ende (222) des Baggerarms oder Auslegers (22) angebracht ist,
und dass die Lasererkennungsvorrichtung (4) sich an dem Baggerarm befindet.

2. Nivellierungsführungssystem nach Anspruch 1, **dadurch gekennzeichnet, dass** das System mehrere Vorrichtungen zur Erkennung von Winkelpositionen (30, 31, 32, 34) umfasst, die jeweils am Trägerarm (21), am Baggerarm (22), an der Erdbewegungsschaufel (24) und an dem Stand (20), wenn dieser schwenkbar ist, platziert sind.

3. Nivellierungsführungssystem nach einem der vorhergehenden Ansprüche, **dadurch gekennzeichnet, dass** die Lasererkennungsvorrichtung (4) und die Vorrichtung zur Erkennung einer Winkelposition (32) zu einer einzigen Erkennungsvorrichtung, die einen Winkelsensor und einen Lasersensor kombiniert, vereint sind.

4. Nivellierungsführungssystem nach einem der vorhergehenden Ansprüche, **dadurch gekennzeichnet, dass** der Lasersensor der Laserdetektorvorrichtung (4) vorzugsweise eine lineare Empfangszelle ist, die ausgerichtete Photodioden beinhaltet, die ermöglichen, Daten, die die Erkennung der Höhe der Bezugsnivellierebene (1) darstellen, aufzunehmen.

5. Nivellierungsführungssystem nach einem der vorhergehenden Ansprüche, **dadurch gekennzeichnet, dass** die Vorrichtungen zur Erkennung von Winkelpositionen (30, 31, 32, 34) und die Lasererkennungsvorrichtung (4) eine Bordstromversorgung und ein drahtloses Kommunikationsmodul umfassen, das zum Übermitteln und Übertragen von Daten an das Steuergerät, das selbst mit einem drahtlosen Kommunikationsmodul ausgestattet ist, konfiguriert ist.

6. Nivellierungsführungssystem nach einem der vorhergehenden Ansprüche, **dadurch gekennzeichnet, dass** die Vorrichtung zur Erkennung einer Winkelposition (30), die an dem Stand (20) positioniert ist, mit dem Steuergerät (10) kombiniert ist.

7. Nivellierungsführungssystem nach einem der vorhergehenden Ansprüche, **dadurch gekennzeichnet, dass** das Steuergerät (10) einen Bildschirm, Bedientasten, einen Speicher, ein Kommunikationsmodul, ein Berechnungsmodul umfasst, wobei das Berechnungsmodul zum Kennen der Platzierung der Erdbewegungsschaufel gegenüber der definierten Nivellierebene (1) und Anzeigen der relativen Angaben der zu bewirkenden Bewegung der Schaufel, um die vertikale Position in Bezug auf die Tiefe (D) mit dem gewünschten Wert zu bewahren, konfiguriert ist.

8. Nivellierungsführungssystem nach einem der vorhergehenden Ansprüche, **dadurch gekennzeichnet, dass** es sich bei der Bordstromversorgung von Erkennungsvorrichtungen (30, 31, 32, 34 und 4) um eine oder mehrere Batterien handelt, die durch Solarzellen wiederaufgeladen werden.

9. Verwendung eines Führungssystems nach einem der Ansprüche 1 bis 8 zur Nivellierung oder Erdbewegung eines Erdbodens mittels einer Erdaushub- oder Erdbewegungsmaschine.

10. Erdaushub- oder Erdbewegungsmaschine, umfassend ein Nivellierungsführungssystem nach einem der Ansprüche 1 bis 8.

## Claims

1. Levelling guide system for excavators equipped with:
- a chassis (25) provided with wheels or tracks (201),
- an operating cab (20) fixed to the chassis (25), preferably pivotably,
- a grading blade (24) that is horizontal, positioned in front of the chassis and mounted on the latter pivotably, and
- a laser detection device (4) comprising a laser sensor configured to identify and recognise a levelling plane (1) defined by a rotary laser (11),
- a control apparatus (10) configured to control the position of the grading blade and give an instruction to the operator so that the grading blade follows the defined levelling plane (1),
**characterised in that** the control apparatus is configured to control the position of the grading blade as a function of the data from the devices for the detection of angular positions (30, 31, 32, 34) and laser detection (4), and **in that** the guide system further comprises:
- an actuator system that receives control signals and makes it possible to actuate the main or support arm, the bucket arm or dipper, the excavating or grading tool and the grading blade,
- devices for the detection of angular positions (30, 31, 32, 34) disposed on the moving parts of the excavator and configured to calculate the angular position relative to the same plane or reference direction, for example, the direction perpendicular to the different moving parts,
- a support arm (21) also called the main arm, fixed pivotably to the cab (20),
- a bucket arm (22) also called the dipper, having a first end (221) and a second end (222), the first end being fixed pivotably to the main or support arm (21),
- a grading or excavation tool (23), fixed pivotably to the second end (222) of the bucket arm (22) or dipper,
and **in that** the laser detection device (4) is situated on the bucket arm.

2. Levelling guide system according to claim 1, **characterised in that** the system comprises several devices for the detection of angular positions (30, 31, 32, 34) placed on the support arm (21), on the bucket arm (22), on the grading blade (24) and on the cab (20) when the latter is pivotable, respectively.

3. Levelling guide system according to one of the preceding claims, **characterised in that** the laser detection device (4) and the angular position detection device (32) are combined into a single detection device combining an angle sensor and laser sensor.

4. Levelling guide system according to one of the preceding claims, **characterised in that** the laser sensor of the laser detector device (4) is preferably a linear reception cell including aligned photodiodes that make it possible to gather data representing detection of the height of the reference levelling plane (1).

5. Levelling guide system according to one of the preceding claims, **characterised in that** the angular position detection devices (30, 31, 32, 34) and the laser detection device (4) comprise an on-board power supply and a wireless communication module configured to communicate and transmit data to the control apparatus, which is itself equipped with a wireless communication module.

6. Levelling guide system according to one of the preceding claims, **characterised in that** the angular position detection device (30) positioned on the cab (20) is combined with the control apparatus (10).

7. Levelling guide system according to one of the preceding claims, **characterised in that** the control apparatus (10) comprises a screen, control keys, a memory, a communication module and a calculation module, the calculation module being configured to find out the location of the grading blade in relation to the defined levelling plane (1) and to display on the screen the details relating to the movement of the blade to be effected in order to keep the vertical depth position (D) at the desired value.

8. Levelling guide system according to one of the preceding claims, **characterised in that** the on-board power supply for the detection devices (30, 31, 32, 34 and 4) is one or more batteries charged by photovoltaic cells.

9. Use of a guide system according to claims 1 to 8 for levelling or grading a soil by means of an excavator or earth-moving machine.

10. Excavator or earth-moving machine comprising a levelling guide system according to one of claims 1 to 8.
